# EUROPÄISCHE PATENTSCHRIFT

(11) **EP 1 097 861 B1**
(45) Veröffentlichungstag und Bekanntmachung des Hinweises auf die Patenterteilung: **26.05.2004**
(21) Anmeldenummer: 00119094.1
(22) Anmeldetag: 02.09.2000
(51) Int. Cl.: B62D 65/00, B62D 47/00

(54) **Personenkraftwagen mit drei Sitzreihen**
Passenger vehicle with three rows of seats
Véhicule automobile avec trois rangées de sièges

(30) Priorität: 08.11.1999 DE 19953698
(43) Veröffentlichungstag der Anmeldung: 09.05.2001
(73) Patentinhaber: DaimlerChrysler AG, 70567 Stuttgart (DE)
(72) Erfinder: Knapp, Thomas, 71711 Murr (DE); Schröck, Edgar, 71364 Winnenden (DE); Steinmann, Uwe, 73274 Notzingen (DE)

(56) Entgegenhaltungen:
- US-A- 4 014 585
- US-A- 5 056 849

## Beschreibung

Die Erfindung betrifft einen Personenkraftwagen mit drei Sitzreihen, nämlich eine bezüglich der Fahrtrichtung vordere Sitzreihe, eine mittlere Sitzreihe und eine bezüglich der Fahrtrichtung hintere Sitzreihe, sowie mit den Merkmalen des Oberbegriffs des Anspruchs 1.

Aus der DE 91 08 838 U1 ist ein Personenkraftwagen dieser Art bekannt. Überlicherweise ist die mittlere Sitzreihe entgegen der Fahrtrichtung angeordnet, so daß sich in Verbindung mit der in Fahrtrichtung angeordneten hinteren Sitzreihe eine Vis-à-Vis-Sitzgruppe ausbildet. Jede Sitzreihe ist quer zur Fahrtrichtung auf jeder Seite durch eine Innenraumverkleidung begrenzt. Die beiden Innenraumverkleidungen der hinteren Sitzreihe sind jeweils an einer hinteren Seitentüre befestigt, die am Fahrzeug zum Öffnen und Schließen gelagert ist. In entsprechender Weise sind auch die beiden Innenraumverkleidungen der vorderen Sitzreihe jeweils an einer vorderen Seitentüre befestigt, die ebenfalls am Fahrzeug zum Öffnen und Schließen gelagert ist. Im Bereich der mittleren Sitzreihe ist beim bekannten Personenkraftwagen an jeder Außenseite zwischen der vorderen Seitentüre und der hinteren Seitentüre eine feste Seitenwand am Fahrzeug ausgebildet, an deren Innenseite die jeweilige Innenraumverkleidung der mittleren Sitzreihe befestigt ist.

Durch die feste Seitenwand ergibt sich in vorteilhafter Weise die Möglichkeit, die Innenraumverkleidung im Bereich der mittleren Sitzreihe besonders großzügig auszubilden, so daß der Personenkraftwagen einen luxuriösen Komfort aufweisen kann.

Bei derartigen Fahrzeugen mit Vis-à-Vis-Sitzgruppe ergibt sich eine Unterteilung des Fahrzeuginnenraumes in einen vorderen Chauffeurraum und einen hinteren Passagierraum. Ein solcher Passagierraum wird vorzugsweise mit einer aufwendigen Komfortausstattung ausgerüstet, wie z.B. einer separaten Klimaanlage, einer Mini-Bar, einer Audio-Anlage, einer Telekommunikations-Anlage sowie einer absenkbaren Trennwand zwischen Chauffeurraum und Passagierraum. Zur Unterbringung dieser Ausstattungselemente bzw. deren Aggregate eignet sich in besondere Weise ein Aggregateraum, der zwischen der vorderen Sitzreihe und der mittleren Sitzreihe im Bereich des Fahrzeugbodens ausgebildet sein kann. Um diese Hilfsaggregate warten zu können, muß bei einem herkömmlichen Personenkraftwagen die mittlere Sitzreihe zumindest teilweise demontiert oder - sofern dies möglich ist - umgeklappt werden, wodurch die Wartung dieser Elemente relativ aufwendig ist.

Aus der US 4 014 585 ist ein Personenkraftwagen mit drei Sitzreihen bekannt, dessen mittlere Sitzreihe in Fahrtrichtung angeordnet ist, so daß sich hier keine Vis-à-Vis-Sitzgruppe ausbildet. Wie bei der vorderen Sitzreihe und bei der hinteren Sitzreihe sind hier auch bei der mittleren Sitzreihe anstelle einer festen Seitenwand Seitentüren vorgesehen, an denen die jeweilige Innenraumverkleidung der mittleren Sitzreihe angeordnet ist. Bei einer derartigen Ausführungsform kann die Innenraumverkleidung im Bereich der mittleren Sitzreihe nicht besonders großzügig ausgebildet werden, da die Dimensionierung dieser Innenraumverkleidung durch die Größe der mittleren Seitentüre vorgegeben ist.

Die vorliegende Erfindung beschäftigt sich mit dem Problem, für einen Personenkraftwagen der eingangs genannten Art eine Ausführungsform anzugeben, die bei einer Vis-à-Vis-Sitzanordnung einerseits eine relativ großzügige Dimensionierung der Innenraumverkleidung ermöglicht und andererseits eine relativ einfache Wartung von Hilfsaggregaten gewährleistet.

Dieses Problem wird erfindungsgemäß durch einen Personenkraftwagen mit den Merkmalen des Anspruchs 1 gelöst.

Die Erfindung beruht auf dem allgemeinen Gedanken, die der mittleren Sitzreihe zugeordneten Seitenwände jeweils nach Art einer Tür zum Öffnen und Schließen am Fahrzeug zu lagern, wobei gleichzeitig die jeweils zugeordnete Innenraumverkleidung nicht an dieser türartig verstellbaren Seitenwand, sondern am Fahrzeug befestigt ist. Dadurch ist es einerseits möglich, die Innenraumverkleidung im Bereich der mittleren Sitzreihe größer auszubilden als die sich beim Öffnen der Seitenwand ausbildenden Öffnung im Fahrzeug. Beispielsweise kann diese Innenraumverkleidung eine diese Öffnung in Fahrzeuglängsrichtung begrenzende und einen Fahrzeugboden mit einem Fahrzeughimmel verbindende Säule im Fahrzeuginnenraum übergreifen, wodurch sich die Innenraumverkleidung in Fahrzeuglängsrichtung um die entsprechende Abmessung dieser Säule verlängern läßt. Die Innenraumverkleidung kann somit besonders großzügig dimensioniert werden. Da beim Öffnen dieser türartigen Seitenwand die zugeordnete Innenraumverkleidung nicht mitschwenkt, sondern invariant am Fahrzeug fixiert bleibt, ergibt sich dadurch andererseits eine besonders bequeme Zugänglichkeit zu Bereichen, die bei geschlossener Seitenwand durch diese verdeckt sind. Bei geöffneter Seitenwand sind somit eine der mittleren Sitzreihe zugewandte Innenseite der Seitenwand und eine der Seitenwand zugewandte Außenseite der mittleren Innenraumverkleidung einfach zugänglich. Beispielsweise sind an der Außenseite der Innenraumverkleidung Bestandteile einer Sitzverstelleinrichtung und eines Seitenairbags angeordnet. An der Innenseite der Seitenwand können Elemente einer Fensterhebeeinrichtung oder einer Vorhangverstelleinrichtung angeordnet sein. In der Außenseite der mittleren Innenraumverkleidung kann vorzugsweise eine Zugriffsöffnung für einen Aggregateraum angeordnet sein, in dem Hilfsaggregate des Fahrzeuges, wie z.B. eine zusätzliche Klimaanlage, eine Trennscheibenverstelleinrichtung oder Elemente einer Sitzverstelleinrichtung, untergebracht sein können. Die Wartung dieser Elemente wird durch die erfindungsgemäß aufklappbare Seitenwand besonders einfach, da die Elemente dann leicht zugänglich sind. Darüber hinaus können die Wartungsarbeiten von außen vorgenommen werden, so daß der Mechaniker mit der gegebenenfalls besonders hochwertigen Innenausstattung des Passagierraumes keinen Kontakt hat.

Darüber hinaus ergeben sich durch die erfindungsgemäß vorgeschlagene Bauweise Vereinfachungen bei der Herstellung des erfindungsgemäßen Personenkraftwagens, da mehrfach auf Baukomponenten zurückgegriffen werden kann, die bei der Herstellung desjenigen Serienfahrzeuges mit zwei Sitzreihen zum Einsatz kommen, das für den erfindungsgemäßen Personenkraftwagen mit drei Sitzreihen als Basis dient. Insbesondere kann der Basispersonenkraftwagen mit zwei Sitzreihen, der an jeder Fahrzeugseite zwischen der vorderen Seitentür und der hinteren Seitentür eine Säule, die sogenannte B-Säule aufweist, mit zwei solchen B-Säulen ausgestattet sein, wobei diese als B1-Säule und B2-Säule bezeichneten Säulen in Fahrtrichtung hintereinander angeordnet sind. Die B1-Säule und die B2-Säule entsprechen dann vorzugsweise identisch der Serien-B-Säule. Die Verlängerung des Fahrzeuges in Fahrzeuglängsrichtung erfolgt dabei durch die Integration eines entsprechenden Zwischenstücks zwischen diesen beiden B-Säulen. Das erfindungsgemäße Fahrzeug mit drei Sitzreihen entspricht dann mit Ausnahme des Bereichs zwischen den B-Säulen einem herkömmlichen Fahrzeug mit zwei Sitzreihen. Insbesondere können die selben vorderen Seitentüren und hinteren Seitentüren verwendet werden.

Durch den erfindungsgemäßen Aufbau des Personenkraftwagens ist zur Erzielung einer relativ großzügigen Ausgestaltung der Innenraumverkleidung nur eine vergleichsweise kleine Vergrößerung der Fahrzeuglänge erforderlich, da die zwischen den B-Säulen angeordnete Seitenwand bezüglich der Fahrzeuglängsrichtung kleiner ausgestaltet werden kann als die zugeordnete Innenraumverkleidung. Je kleiner jedoch die Fahrzeugverlängerung zwischen den B-Säulen ausfällt, desto kleiner ist die Gewichtszunahme und die Steifigkeitsabnahme der Konstruktion.

Gemäß einer vorteilhaften Weiterbildung des erfindungsgemäßen Personenkraftwagens kann die Innenraumverkleidung der mittleren Sitzreihe an einem Träger befestigt sein, der seinerseits am Fahrzeug, insbesondere an einem Türrahmen befestigt ist, der die sich beim Öffnen der Seitenwand ausbildende Öffnung einfaßt. Diese Maßnahme ermöglicht eine besonders einfache Demontage der Innenraumverkleidung der mittleren Sitzreihe, wodurch weitergehende Wartungsmaßnahmen vereinfacht werden.

Entsprechend einer besonders vorteilhaften Variante kann die Seitenwand mit einer Öffnungseinrichtung gekoppelt sein, die zum Öffnen der Seitenwand durch ein Betätigungsorgan betätigbar ist, das in einem der vorderen Sitzreihe zugeordneten Innenraumbereich (Chauffeurraum) angeordnet ist. Bei einer derartigen Ausführungsform können Betätigungsorgane an der Seitenwand auf der Außenseite des Fahrzeugs entfallen, so daß das Fahrzeug von außen den Eindruck erweckt, die Seitenwand sei fest ausgebildet. Außerdem kann der Chauffeur vom Chauffeurraum aus die Seitenwand öffnen, so daß Wartungsmaßnahmen ohne Kontakt des Chauffeurs bzw. des Monteurs mit dem Passagierraum durchführbar sind.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine Seitenansicht auf einen Personenkraftwagen nach der Erfindung bei geschlossener Seitenwand,
- Fig. 2: eine Seitenansicht wie in Fig. 1, jedoch bei geöffneter Seitenwand, und
- Fig. 3: eine Innensansicht auf einen der Seitenwand zugeordneten Bereich des Fahrzeuginnenraumes bei teilweise geöffneter Seitenwand.

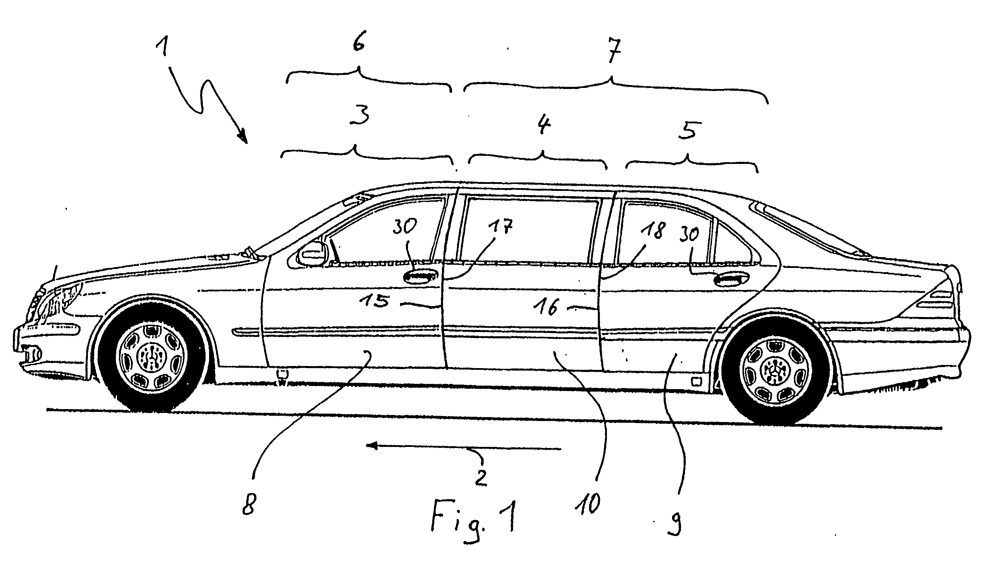

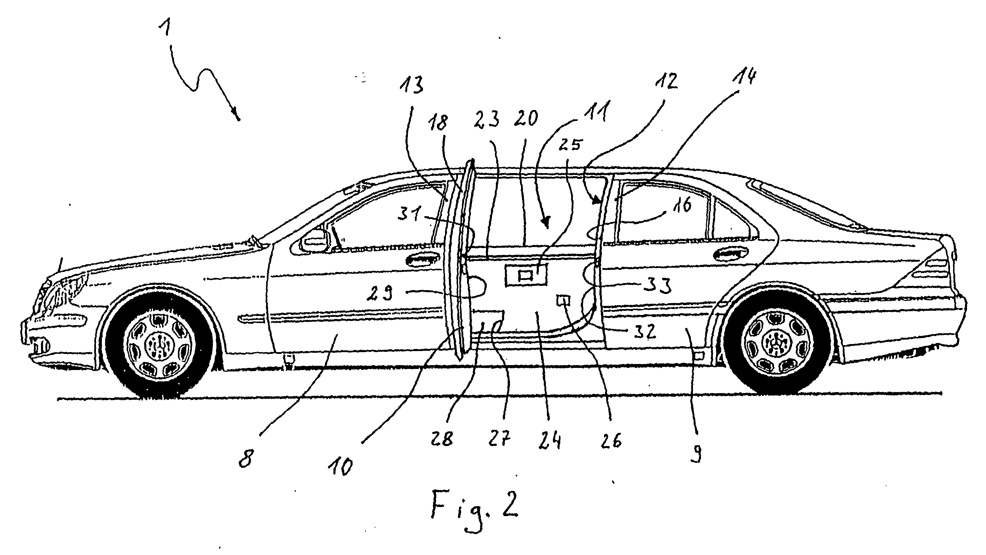

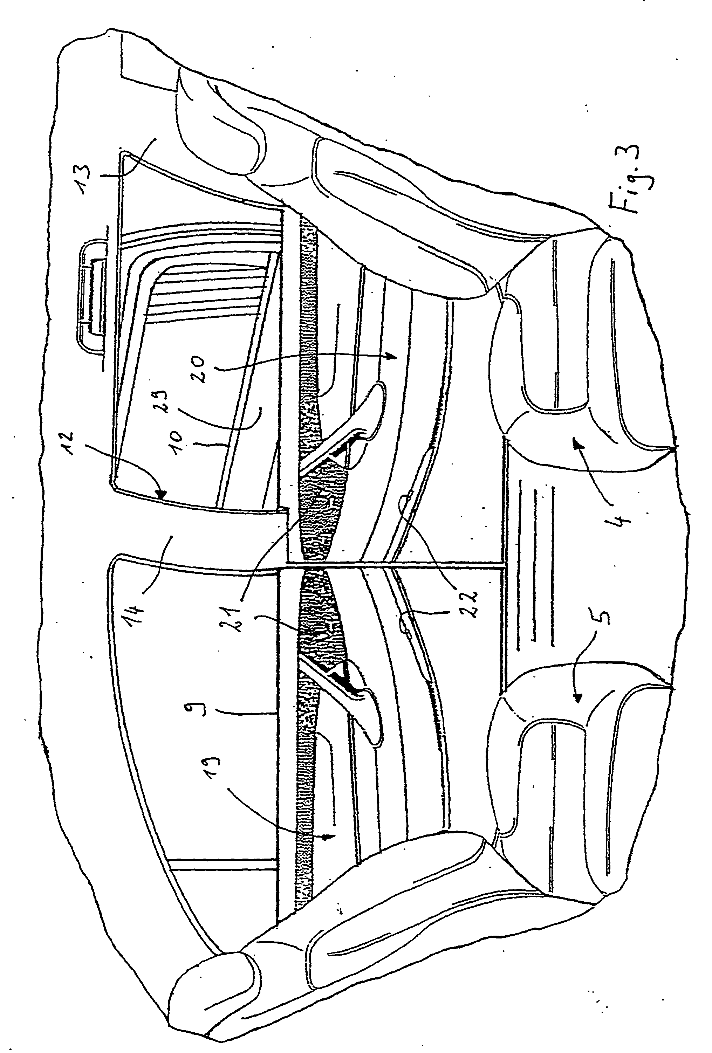

Entsprechend den Fig. 1 und 2 weist ein erfindungsgemäßer Personenkraftwagen 1 in seinem Inneren bezüglich einer mit einem Pfeil 2 gekennzeichneten Fahrtrichtung drei hintereinander angeordnete Sitzreihen auf, die in Fig. 3 zumindest teilweise einsehbar sind. Eine bezüglich der Fahrtrichtung 2 vordere Sitzreihe ist durch eine geschweifte Klammer 3, eine mittlere Sitzreihe ist durch eine geschweifte Klammer 4 und eine bezüglich der Fahrtrichtung 2 hintere Sitzreihe ist durch eine geschweifte Klammer 5 gekennzeichnet. Der Personenkraftwagen 1 ist vorzugsweise als Limousine mit Stufenheck ausgebildet.

Die vordere Sitzreihe 3 und die hintere Sitzreihe 5 sind in herkömmlicher Weise in Fahrzeuglängsrichtung 2 angeordnet, so daß eine darauf sitzende Person in Fahrtrichtung 2 blickt. Im Unterschied dazu ist die mittlere Sitzreihe 4 entgegen der Fahrtrichtung 2 angeordnet, so daß eine darauf sitzende Person entgegen der Fahrtrichtung 2 blickt. Üblicherweise ist zwischen der vorderen Sitzreihe 3 und der mittleren Sitzreihe 4 eine im wesentlichen vertikal und quer zur Fahrtrichtung 2 verlaufende, hier nicht sichtbare Trennwand angeordnet, die zweckmäßigerweise versenkbar ausgebildet sein kann. Durch diese Trennwand wird der Fahrzeuginnenraum in einen durch eine geschweifte Klammer gekennzeichneten Chauffeurraum 6 und einen durch eine geschweifte Klammer gekennzeichneten Passagierraum 7 unterteilt, in dem die mittlere Sitzreihe 4 und die hintere Sitzreihe 5 eine Vis-à-Vis-Sitzgruppe bilden.

Dem Chauffeurraum 6 ist auf jeder Seite des Fahrzeuges 1 eine vordere Seitentür 8 zugeordnet, durch die der Chauffeur bzw. ein Beifahrer in den Chauffeurraum 6 eintreten kann. Dem Passagierraum 7 ist auf jeder Seite des Fahrzeugs 1 jeweils eine hintere Seitentür 9 zugeordnet, durch welche die Passagiere in den Passagierraum 7 eintreten können. Auf jeder Fahrzeugseite ist zwischen der vorderen Seitentür 8 und der hinteren Seitentür 9 eine Seitenwand 10 angeordnet, die zwischen einer in Fig. 1 wiedergegebenen Schließstellung und einer in Fig. 2 wiedergegebenen Öffnungsstellung schwenkverstellbar am Fahrzeug 1 gelagert ist. Die Seitenwand 10 ist dabei wie die Seitentüren 8 und 9 am Fahrzeug 1 gelagert.

Wie in Fig. 2 erkennbar ist, bildet sich bei geöffneter Seitenwand 10 eine Öffnung 11 in der Fahrzeugseite, die durch einen Rahmen 12 eingefaßt ist. Dieser Rahmen 12 weist zwei Säulen 13 und 14 auf, durch welche die Öffnung 11 in Fahrtrichtung 2 nach vorn und nach hinten begrenzt ist. Dabei wird die vordere Säule 13 als B1-Säule und die hintere Säule 14 als B2-Säule bezeichnet.

Bei der hier wiedergegebenen bevorzugten Ausführungsform sind die B-Säulen 13 und 14 baugleich und somit im wesentlichen gleich geformt ausgebildet, wodurch eine vorteilhafte Vereinheitlichung der zur Herstellung des Fahrzeuges 1 benötigten Baukomponenten erreicht werden kann. Dementsprechend sind auch die daran angrenzenden Bauteile bzw. Bauteilkomponenten im Bereich der Säulen 13 und 14 nahezu identisch geformt. Insbesondere ist eine vordere Stirnseite 15 der Seitenwand 10 im wesentlichen gleich geformt wie eine vordere Stirnseite 16 der hinteren Seitentüre 9. Ebenso ist eine hintere Stirnseite 17 der vorderen Seitentüre 8 nahezu identisch geformt wie eine hintere Stirnseite 18 der Seitenwand 10. Entsprechendes gilt für die B-Säulen 13 und 14.

Insbesondere ist in die hintere Stirnseite 18 der Seitenwand 10 ein Türschloß 31 integriert, das so auch die hintere Stirnseite 17 der vorderen Seitentür 8 aufweist. Ebenso weist eine vordere Stirnseite 32 der B2-Säule 14 ein Beschlagteil 33 auf, das mit dem Schloß 31 zusammenwirkt und das so auch in der B1-Säule 13 angebracht ist.

Entsprechend Fig. 3 werden die hintere Sitzreihe 5 und die mittlere Sitzreihe 4 seitlich, d.h. quer zur Fahrtrichtung 2 an jeder Fahrzeugseite durch eine Innenraumverkleidung 19 bzw. 20 begrenzt. Beide Innenraumverkleidungen 19 und 20 sind mit üblichen, gehobenen Komfortausstattungen, wie z.B. Betätigungselemente 21 einer Sitzverstelleinrichtung und Betätigungselemente 22 einer Fensterhebeeinrichtung, ausgerüstet.

Die Dimensionierung der der hinteren Sitzreihe 5 zugeordneten Innenraumverkleidung 19 ist durch die Dimension der hinteren Fahrzeugtür 9 vorgegeben, da die zugehörige Innenraumverkleidung 19 an der hinteren Fahrzeugtür 9 befestigt ist und mit dieser beim Öffnen und Schließen mitverschwenkt. In entsprechender Weise ist auch eine hier nicht dargestellte Innenraumverkleidung der vorderen Fahrzeugtür 8 an dieser befestigt. Im Unterschied dazu ist jedoch die der mittleren Sitzreihe 4 zugeordnete Innenraumverkleidung 20 am Fahrzeug 1 bzw. am Rahmen 12 der Seitenwand 10 befestigt. Dementsprechend ist die Dimensionierung der der mittleren Sitzreihe 4 zugeordneten Innenraumverkleidung 20 nicht durch die Dimension der Seitenwand 10 begrenzt, sondern kann insbesondere im Bereich der B2-Säule 14 entgegen der Fahrtrichtung 2 über die Seitenwand 10 hinaus verlängert werden, wobei die mittlere Innenraumverkleidung 20 wie in Fig. 3 die B2-Säule 14 im Fahrzeuginnenraum umfaßt. Auf diese Weise können die hintere Innenraumverkleidung 19 und die mittlere Innenraumverkleidung 20 direkt aneinandergrenzen, wobei eine quer zur Fahrtrichtung 2 verlaufende Ebene als Spiegelebene für eine komfortbetonte symmetrische Innenraumgestaltung dienen kann.

Entsprechend Fig. 2 ist am Rahmen 12 ein hier stabförmig ausgebildeter Träger 23 befestigt, an dem die mittlere Innenraumverkleidung 20 an einer der Seitenwand 10 zugewandten Außenseite 24 angebracht ist. Die Befestigung der mittleren Innenraumverkleidung 20 am Fahrzeug 1 ist vorzugsweise so ausgebildet, daß diese relativ einfach demontiert und montiert werden kann.

An der Außenseite 24 der mittleren Innenraumverkleidung 20 sind beispielsweise ein Bestandteil 25 eines Seitenairbags und Komponenten 26 der Betätigungselemente 21 der Sitzverstelleinrichtung angebracht. Außerdem enthält die Außenseite 24 eine Zugriffsöffnung 27 zu einem Aggregateraum 28, der am Fahrzeugboden zwischen der vorderen Sitzreihe 3 und der mittleren Sitzreihe 4 ausgebildet ist. In diesem Aggregateraum 28 kann beispielsweise eine Zusatzklimaanlage für den Passagierraum 7 sowie eine Verstelleinrichtung für eine zwischen der vorderen Sitzreihe 3 und der mittleren Sitzreihe 4 angeordnete, versenkbare Trennwand angeordnet sein. An einer der mittleren Innenraumverkleidung 20 zugewandten Innenseite 29 der Seitenwand 10 können hier nicht dargestellte Elemente einer Fensterhebeeinrichtung oder Bestandteile einer Vorhangverstelleinrichtung angeordnet sein. Bei der in Fig. 2 dargestellten Offenstellung der Seitenwand 10 sind die Innenseite 29 der Seitenwand 10 und die Außenseite 24 der Innenraumverkleidung von der Fahrzeugaußenseite her bequem zugänglich, so daß die daran angeordneten Elemente bzw. die im Aggregateraum 28 angeordneten Bauteile problemlos montiert, demontiert und gewartet werden können.

Entsprechend Fig. 1 ist die Seitenwand 10 von außen nicht als schwenkbares Element erkennbar, da die Seitenwand 10 wie ein festes Mittelteil aussieht, insbesondere fehlt der Seitenwand 10 ein von außen betätigbarer Türgriff 30, wie ihn die vordere Seitentür 8 und die hintere Seitentür 9 aufweisen.

Zum Öffnen der Seitenwand 10 ist eine hier nicht näher beschriebene Öffnungseinrichtung vorgesehen, die mit dem Türschloß 31 der Seitenwand 10 gekoppelt ist. Die Öffnungseinrichtung weist ein Betätigungsorgan auf, bei dessen Betätigung das Türschloß 31 öffnet, so daß die Seitenwand 10 in die in Fig. 2 wiedergegebene Offenstellung überführt werden kann. Dieses Betätigungsorgan ist vorzugsweise im Chauffeurraum 6 angeordnet, so daß der Chauffeur die Seitenwand 10 öffnen kann.

## Patentansprüche

1. Personenkraftwagen mit drei Sitzreihen, nämlich bezüglich der Fahrtrichtung (2) eine vordere Sitzreihe (3), eine mittlere Sitzreihe (4) und eine hintere Sitzreihe (5), mit folgenden Merkmalen:
- die mittlere Sitzreihe (4) ist entgegen der Fahrtrichtung (2) angeordnet,
- jede Sitzreihe (3,4,5) ist auf jeder Seite durch eine Innenraumverkleidung (19,20) begrenzt,
- die beiden Innenraumverkleidungen (19) der hinteren Sitzreihe (5) sind jeweils an einer hinteren Seitentür (9) befestigt, die am Fahrzeug (1) gelagert ist,
- die beiden Innenraumverkleidungen der vorderen Sitzreihe (3) sind jeweils an einer vorderen Seitentür (8) befestigt, die am Fahrzeug (1) gelagert ist,
- die beiden Innenraumverkleidungen der mittleren Sitzreihe (4) sind jeweils an einer zwischen vorderer Seitentür (8) und hinterer Seitentür (9) angeordneten Seitenwand (10) angeordnet,
**gekennzeichnet durch** folgende Merkmale:
- die beiden Innenraumverkleidungen der mittleren Sitzreihe (4) sind jeweils an Säulen (13, 14) des Türrahmens befestigt,
- die beiden Seitenwände (10) sind jeweils nach Art einer Seitentür am Fahrzeug (1) gelagert,
- bei geöffneter Seitenwand (10) sind eine der Seitenwand (10) zugewandte Außenseite (24) der jeweiligen Innenraumverkleidung (20) der mittleren Sitzreihe (4) und eine der Innenraumverkleidung (20) zugewandte Innenseite (29) der Seitenwand (10), insbesondere für Wartungszwecke, zugänglich.

2. Personenkraftwagen nach Anspruch 1,
**dadurch gekennzeichnet,**
**daß** am Fahrzeug (1) für die Seitenwand (10) ein Rahmen (12) ausgebildet ist, der eine vordere Säule (B1-Säule 13) und eine hintere Säule (B2-Säule 14) aufweist, wobei die Innenraumverkleidung (20) der mittleren Sitzreihe (4) an diesem Rahmen (12) befestigt ist.

3. Personenkraftwagen nach Anspruch 2,
**dadurch gekennzeichnet,**
**daß** die Innenraumverkleidung (20) der mittleren Sitzreihe (4) an einem Träger (23) befestigt ist, der seinerseits am Rahmen (12) der Seitenwand (10) befestigt ist.

4. Personenkraftwagen nach einem der Ansprüche 1 bis 3,
**dadurch gekennzeichnet,**
**daß** zwischen der vorderen Sitzreihe (3) und der mittleren Sitzreihe (4) ein Aggregateraum (28) ausgebildet ist, der durch eine Öffnung (27) in der Außenseite (24) der Innenraumverkleidung (20) der mittleren Sitzreihe (4) zugänglich ist.

5. Personenkraftwagen nach einem der Ansprüche 1 bis 4,
**dadurch gekennzeichnet,**
**daß** die Seitenwand (10) mit einer Öffnungseinrichtung zum Öffnen der Seitenwand (10) gekoppelt ist, die durch ein Betätigungsorgan betätigbar ist, das in einem der vorderen Sitzreihe (3) zugeordneten Innenraumbereich (6) angeordnet ist.

6. Personenkraftwagen nach einem der Ansprüche 1 bis 5,
**dadurch gekennzeichnet,**
**daß** am Fahrzeug (1) für die Seitenwand (10) ein Rahmen (12) ausgebildet ist, der eine vordere Säule (B1-Säule 13) und eine hintere Säule (B2-Säule 14) aufweist, wobei die beiden Säulen (13,14) einen im wesentlich gleich geformten Aufbau aufweisen.

7. Personenkraftwagen nach Anspruch 6,
**dadurch gekennzeichnet,**
**daß** eine vordere Stirnseite (15) der Seitenwand (10) einen im wesentlichen gleich geformten Aufbau aufweist wie eine vordere Stirnseite (16) der hinteren Seitentür (9) derselben Fahrzeugseite.

8. Personenkraftwagen nach Anspruch 7,
**dadurch gekennzeichnet,**
**daß** eine hintere Stirnseite der B1-Säule (13) einen im wesentlichen gleich geformten Aufbau aufweist wie eine hintere Stirnseite der B2-Säule (14) derselben Fahrzeugseite.

9. Personenkraftwagen nach einem der Ansprüche 1 bis 8,
**dadurch gekennzeichnet,**
**daß** eine hintere Stirnseite (18) der Seitenwand (10) einen im wesentlichen gleich geformten Aufbau aufweist wie eine hintere Stirnseite (17) der vorderen Seitentür (8) derselben Fahrzeugseite.

10. Personenkraftwagen nach Anspruch 9,
**dadurch gekennzeichnet,**
**daß** eine vordere Stirnseite der B1-Säule (13) einen im wesentlichen gleich geformten Aufbau aufweist wie eine vordere Stirnseite (32) der B2-Säule (14) derselben Fahrzeugseite.

## Claims

1. Passenger car with three rows of seats, these being, in the direction of travel (2), a front row of seats (3), a middle row of seats (4) and a rear row of seats (5), with the following features:
- the middle row of seats (4) is arranged to face against the direction of travel (2),
- each row of seats (3, 4, 5) is bounded by a lining (19, 20) of the passenger compartment,
- each of the two passenger compartment linings (19) of the rear row of seats (5) is attached to a rear side door (9) supported on the vehicle (1),
- each of the two passenger compartment linings of the front row of seats (3) is attached to a front side door (8) supported on the vehicle (1),
- each of the two passenger compartment linings of the middle row of seats (4) is located on a side wall (10) between the front side door (8) and the rear side door (9),
**characterised by** the following features:
- each of the two passenger compartment linings of the middle row of seats (4) is attached to pillars (13, 14) of the door frame,
- each of the two side walls (10) is supported on the vehicle (1) in the manner of a side door,
- when the side wall (10) is open, an outer surface (24) of the passenger compartment lining (20) of the middle row of seats (4), which faces the side wall (10), and an inner surface (29) of the side wall (10), which faces the passenger compartment lining (20), are accessible, in particular for maintenance purposes.

2. Passenger car according to claim 1,
**characterised in that**
the vehicle features a frame (12) for the side wall (10) comprising a front pillar (B1-pillar 13) and a rear pillar (B2-pillar 14), the passenger compartment lining (20) of the middle row of seats (4) being attached to this frame (12).

3. Passenger car according to claim 2,
**characterised in that**
the passenger compartment lining (20) of the middle row of seats (4) is attached to a structural member (23) mounted on the frame (12) of the side wall (10).

4. Passenger car according to any of claims 1 to 3,
**characterised in that**
an equipment compartment (28) accessible through an opening (27) in the outer surface (24) of the passenger compartment lining (20) of the middle row of seats (4) is provided between the front row of seats (3) and the middle row of seats (4).

5. Passenger car according to any of claims 1 to 4,
**characterised in that**
the side wall (10) is coupled to an opening device for opening the side wall (10), which can be operated by a mechanism located in the passenger compartment region (6) associated with the front row of seats (3).

6. Passenger car according to any of claims 1 to 5,
**characterised in that**
the vehicle features a frame (12) for the side wall (10) comprising a front pillar (B1-pillar 13) and a rear pillar (B2-pillar 14), the two pillars (13, 14) having a substantially identical structure.

7. Passenger compartment according to claim 6,
**characterised in that**
a front end face (15) of the side wall (10) has a structure substantially identical to that of a front end face (16) of the rear side door (9) on the seam side of the vehicle.

8. Passenger car according to claim 7,
**characterised in that**
a rear end face of the B1-pillar (13) has a structure substantially identical to that of a rear end face of the B2-pillar (14) on the same side of the vehicle.

9. Passenger car according to any of claims 1 to 8,
**characterised in that**
a rear end face (18) of the side wall (10) has a structure substantially identical to that of a rear end face (17) of the front side door (8) on the seam side of the vehicle.

10. Passenger car according to claim 9,
**characterised in that**
a front end face of the B1-pillar (13) has a structure substantially identical to that of a front end face (32) of the B2-pillar (14) on the same side of the vehicle.

## Revendications

1. Voiture particulière avec trois rangées de sièges, à savoir, dans le sens de la marche (2), une rangée de siège avant (3), une rangée de sièges centrale (4) et une rangée de siège arrière (5), ayant les caractéristiques suivantes :
la rangée de sièges centrale (4) est placée dans le sens inverse de la marche (2),
chaque rangée de sièges (3, 4, 5) est limitée de chaque côté par une garniture intérieure (19, 20),
les deux garnitures intérieures (19) de la rangée de siège arrière (5) sont fixées chacune à une porte latérale arrière (9) qui est logée dans la voiture (1),
les deux garnitures intérieures (19) de la rangée de siège avant (3) sont fixées chacune à une porte latérale avant (8) qui est logée dans la voiture (1),
les deux garnitures intérieures (19) de la rangée de siège centrale (4) sont fixées chacune à un panneau latéral (10) agencé entre la porte latérale avant (8) et la porte latérale arrière (9),
**caractérisée par** les caractéristiques suivantes :
les deux garnitures intérieures de la rangée de siège centrale (4) sont fixées chacune à des montants (13, 14) du châssis de porte,
les deux panneaux latéraux (10) sont logés chacun dans la voiture (1) à la manière d'une porte latérale,
lorsque le panneau latéral (10) est ouvert, un côté extérieur (24), tourné vers le panneau latéral (10), de la garniture intérieure respective (20) de la rangée de sièges centrale (4) et un côté intérieur (29), tourné vers la garniture intérieure (20), du panneau latéral (10) sont accessibles, en particulier pour l'entretien.

2. Voiture particulière selon la revendication 1, **caractérisée en ce que**, dans la voiture (1), pour le panneau latéral (10), un châssis (12) est formé qui comporte un montant avant (B1-montant 13) et un montant arrière (B1-montant 14), la garniture intérieure (20) de la rangée de sièges centrale (4) étant fixée à ce châssis (12).

3. Voiture particulière selon la revendication 2, **caractérisée en ce que** la garniture intérieure (20) de la rangée de sièges centrale (4) est fixée à un support (23) qui est lui-même fixé au châssis (12) du panneau latéral (10).

4. Voiture particulière selon l'une quelconque des revendications 1 à 3, **caractérisée en ce qu'**un espace pour des groupes (28), qui est accessible par une ouverture (27) dans le côté extérieur (24) de la garniture intérieure (20) de la rangée de sièges centrale (4), est formé entre la rangée de sièges avant (3) et la rangée de sièges centrale (4).

5. Voiture particulière selon l'une quelconque des revendications 1 à 4, **caractérisée en ce que** le panneau latéral (10) est couplé à un dispositif d'ouverture pour l'ouverture du panneau latéral (10) qui peut être actionné à l'aide d'un organe d'actionnement qui est disposé dans une zone intérieure (6) associée à la rangée de sièges arrière (3).

6. Voiture particulière selon l'une quelconque des revendications 1 à 5, **caractérisée en ce que**, dans la voiture (1), pour le panneau latéral (10), un châssis (12) est formé qui comporte un montant avant (B1-montant 13) et un montant arrière (B1-montant 14), les deux montants (13, 14) présentant une construction de forme sensiblement identique.

7. Voiture particulière selon la revendication 6, **caractérisée en ce qu'**une face avant (15) du panneau latéral (10) présente une construction de forme sensiblement identique à celle d'une face avant (16) de la porte latérale arrière (9) du même côté de la voiture.

8. Voiture particulière selon la revendication 7, **caractérisée en ce qu'**une face arrière (13) du montant B1 (13) présente une construction de forme sensiblement identique à celle d'une face arrière du montant B2 (14) du même côté de la voiture.

9. Voiture particulière selon l'une quelconque des revendications 1 à 8, **caractérisée en ce qu'**une face arrière (18) du panneau latéral (10) présente une construction de forme sensiblement identique à celle d'une face arrière (17) de la porte latérale avant (8) du même côté de la voiture.

10. Voiture particulière selon la revendication 9, **caractérisée en ce qu'**une face avant du montant B1 (13) présente une construction de forme sensiblement identique à celle d'une face avant (32) du montant B2 (14) du même côté de la voiture.
